(19) **Europäisches Patentamt**

**European Patent Office**

**Office européen des brevets**

(11) **EP 0 693 693 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.$^7$: **G01S 3/48**

(21) Anmeldenummer: **95111131.9**

(22) Anmeldetag: **15.07.1995**

(54) **Grossbasis-Interferometerpeilsystem**

Long baseline interferometer DF system

Système de radiogoniométrie fonctionnant sur le principe de l'interférométrie avec une grande base

(84) Benannte Vertragsstaaten:
**DE FR GB**

(30) Priorität: **20.07.1994 DE 4425661**

(43) Veröffentlichungstag der Anmeldung:
**24.01.1996 Patentblatt 1996/04**

(73) Patentinhaber: **EADS Deutschland GmbH**
**81663 München (DE)**

(72) Erfinder: **Liebmann, Rainer, Dr.**
**D-86199 Augsburg (DE)**

(74) Vertreter: **Straub, Bernd**
**DaimlerChrysler AG,**
**Intellectual Property Management,**
**Sedanstr. 10 / Geb. 17**
**89077 Ulm (DE)**

(56) Entgegenhaltungen:
**GB-A- 2 142 202          US-A- 4 638 320**

• **PROCEEDINGS OF ICASSP 83. IEEE INTERNATIONAL CONFERENCE ON ACOUSTICS, SPEECH AND SIGNAL PROCESSING, BOSTON, MA, USA, 14-16 APRIL 1983, 1983, NEW YORK, NY, USA, IEEE, USA, Seiten 352-355 vol.1, MALLOY N J 'Analysis and synthesis of general planar interferometer arrays'**

**Beschreibung**

Die Erfindung betrifft ein Großbasis-Interferometerpeilsystem gemäß Oberbegriff des Patentanspruchs 1. Ein solches ist bereits aus dem Artikel von N.J. Malloy "Analysis and Synthesis of General Planar Interferometer Arrays" in: Proceedings der Konferenz ICASSP 1983 vom 14.-16.04.83 in Boston, USA, bekannt.

Großbasis-Interferometerpeilsysteme dieser Art können Azimut und Elevation einer einfallenden elektromagnetischen Welle maximal im gesamten möglichen Blickfeld von 0° bis 360° (Azimut) und 0° bis 90° (Elevation) bestimmen. Solche Peilsysteme bestehen aus einem Array von N in einer Ebene angeordneten Antennen (also einem zweidimensionalen Array), aus einer Einrichtung zur Messung der Phasendifferenzen zwischen einem geeigneten Satz von Antennenpaaren und aus einer Auswerteeinheit zur Berechnung und Darstellung der gepeilten Richtung.

Großbasis bedeutet hier, daß die Abstände zwischen allen Paaren von Antennen (d.h. alle Aperturen) des Arrays größer sind als die halbe Wellenlänge $\lambda/2$ der zu peilenden elektromagnetischen Welle. Oberhalb dieser Grenze können die Phasendifferenzen nicht mehr eindeutig gemessen werden. Deshalb besteht die zusätzliche Aufgabe der meisten Peilverfahren (außer reiner Korrelationsverfahren) bei einem Großbasis-Peilsystem im Vergleich zu einem mit kleiner Basis in der Bestimmung des Vektors der ganzzahligen Vielfachen $\vec{n} = (n_1 ... n_M)$ von 360°, um die die an den M (bevorzugt: M = N - 1) verwendeten Aperturen gemessenen Phasendifferenzen ergänzt werden müssen, um die vollständigen Phasendifferenzen zu erhalten.

Voraussetzung für das Funktionieren eines reinen Großbasis-Interferometers, bei dem alle Aperturen größer als $\lambda/2$ sind, ist die Bedingung, daß das Antennendiagramm (= charakteristische Funktion) im gesamten Blickfeld neben der Hauptkeule keine gleich hohen und damit äquivalenten Nebenkeulen besitzen darf. Man muß also durch geeignete Wahl der Array-Geometrie erreichen, daß die Mehrdeutigkeiten aller einzelnen Aperturen im gesamten Blickfeld für keine außer der richtigen Richtung zusammenfallen.

J.E. Hanson hat 1973 in seiner Studie "On Resolving Angle Ambiguities of n-Channel Interferometer Systems for Arbitrary Antenna Arrangement in a Plane" (Johns Hopkins University, USA, Oct. 1973) - vgl. dort insbesondere das zusammenfassende Diagramm auf S. 51 - gezeigt, daß es bei planaren (also nicht linearen) Arrays nur drei Typen von Mehrdeutigkeits-Diagrammen gibt:

Typ 1:  zweidimensionale Punktgitter, die die Schnittpunkte von zwei nicht parallelen eindimensionalen Liniengittern sind;

Typ 2:  eindimensionale Punktgitter entlang einer Geraden;

Typ 3:  Arrays ohne jede Mehrdeutigkeit.

Die Abstände zwischen den Punkten der Punktgitter sind umgekehrt proportional zur Frequenz.

Aus diesem Diagramm geht auch hervor, daß alle Kreisarrays, deren N Elemente ein regelmäßiges Polygon mit N = 5 (Pentagon) oder N > 6 bilden, zum Typ 3 gehören. Der Grund dafür ist, daß dann zueinander parallele Aperturen mit irrationalem Längenverhältnis auftreten. Sie sind im Prinzip bis zu beliebig großen Frequenzen eindeutig. Dieses Ergebnis ist in Hansons Studie auf den vorausgehenden Seiten abgeleitet worden, für das regelmäßige Pentagon ganz explizit auf S. 39.

Dagegen sind die Typen 1 und 2 eindeutig nur unterhalb einer maximalen Frequenz, bei der zwei Punkte des zwei-bzw. eindimensionalen Mehrdeutigkeitsgitters so eng zusammenrücken, daß sie gleichzeitig im Blickfeld auftreten können und damit eine nicht zu beseitigende Mehrdeutigkeit verursachen würden.

Bei Arrays vom Typ 1 sitzen auch die Antennenelemente auf Positionen eines periodischen zweidimensionalen Punktgitters (das gerade dual bzw. reziprok zu dem zweidimensionalen Punktgitter der Mehrdeutigkeiten ist), dessen Gitterkonstanten maximal von der Größenordnung der halben Wellenlänge der einfallenden elektromagnetischen Welle sein dürfen. Solche Arrays können trotzdem echte Großbasisarrays sein, weil die Elemente ja nicht auf benachbarten Plätzen dieses Gitters sitzen müssen. Bedingung ist nur, daß kein gröberes Gitter existiert, das auch alle N von Antennen besetzten Positionen enthält.

Genau auf solche Arrays von Typ 1 ist das sehr schnelle Peilauswerteverfahren von Malloy anwendbar, das im wesentlichen aus fünf Schritten besteht (vgl. bei Malloy insbesondere S. 355 oben links).

Schritt 0:  Messung der Phasendifferenzen an M ausgewählten Aperturen des Peilsystems.

Schritt 1:  Die M gemessenen Phasenwerte werden als Punkt in einen (M-2)-dimensionalen Phasenraum projiziert. Falls keine Phasenfehler vorliegen, liegt der projizierte Punkt genau auf einem Gitterpunkt eines periodischen Phasenraumgitters, bei kleinen Fehlern in dessen Nähe.

Schritt 2:  Es wird der dem projizierten Punkt nächstgelegene Gitterpunkt dieses Phasenraumgitters bestimmt ("Gitterquantisierung"). Dies entspricht der Auswahl des Vektors n der ganzzahligen Vielfachen, der die Summe der Phasenfehlerquadrate minimiert.

Die diesem Gitterpunkt benachbarten weiteren Gitterpunkte entsprechend den wahrscheinlichsten Fehleinweisungen (d.h. falscher $\vec{n}$- und damit Richtungsbestimmung).

Wie die Projektionsmatrix von Schritt 1 ist auch das Phasenraumgitter durch die mit Antennen besetzen Positionen des Antennengitters definiert.

Schritt 3:	Aus dem Indexvektor $\vec{m}$ dieses Phasenraum-Gitterpunktes wird $\vec{n}$ direkt bestimmt, d.h. ohne Vergleich mehrerer Sätze von ganzzahligen Vielfachen n. Damit sind die vollständigen Phasendifferenzen an allen Aperturen bekannt.

Schritt 4:	Durch Lösung eines linearen Gleichungssystems, d.h. effektiv durch lineare Transformation mit einer festen Matrix (bei Malloy Gleichungen (8) und (4)), werden daraus die Komponenten der Richtungskosinus u bestimmt.

Schritt 5:	(bei Malloy nicht explizit angegeben, weil selbstverständlich): Umrechnung der kartesischen Richtungskosinuskomponenten in Polarkoordinaten (Azimut und Elevation; eine ARCTAN- und eine ARCCOS-Bildung).

Dieses bekannte Verfahren ist jedoch nur für Interferometer des Typs 1 geeignet; es ist sehr schnell, weil die auftretenden Matrizen für eine Antennenkonfiguration nur einmal berechnet werden müssen und dann pro Peilung nur sehr wenige schnelle Operationen durchgeführt werden müssen.

Ferner wurde bereits ein Peilauswerteverfahren vorgeschlagen, das auf einem zweistufigen Korrelations-/Fourier-analyseverfahren beruht und bei dem in der ersten Stufe mit einem Korrelationsverfahren auf einem diskreten Azimut-Elevations-Raster die S Rasterpunkte gesucht werden, für die die Abweichungen zwischen Soll- und Meßwerten der Phasendifferenzen am kleinsten sind. Zur genaueren Peilung könnte man dann in der Umgebung dieser S Rasterpunkte feiner interpolieren und so die Richtung bestimmen, für die die interpolierten Abweichungen am kleinsten sind. Für dieses Verfahren braucht man die ganzzahligen Vielfachen $\vec{n}$ nicht.

Stattdessen werden bei diesem Verfahren in der zweiten Stufe für die S besten Grobrichtungen die zugehörigen ganzzahligen Vielfachen $\vec{n}$ zu den Meßwerten addiert und dann getestet, welcher Satz von vollständigen Phasendifferenzen am besten durch eine Linearkombination von Sinus- und Kosinusfunktion (vom Azimut, wegen der Kreisform des Arrays) beschrieben wird. Aus Verhältnis und Summe der Quadrate der entsprechenden Fourierkoeffizienten erster Ordnung werden dann Azimut und Elevation bestimmt.

Schließlich sind aus der EP 0 125 838 A1 drei Auswerteverfahren bekannt, die dort insbesondere auf ein Peilsystem mit einem regelmäßigen Fünfeck-Antennenarray angewandt werden:

a) eine Histogrammethode für beliebige Antennenarrays,

b) eine der ersten Stufe des weiter oben beschriebenen zweistufigen Verfahrens ähnliche Korrelationsmethode für beliebige Arrays,

c) eine der zweiten Stufe des zuvor genannten zweistufigen Verfahrens ähnliche Fourieranalysemethode für Kreisarrays.

Bei der Histogrammethode werden für eine geeignete Auswahl von Aperturen jeweils aus den Meßwerten alle mehrdeutigen Richtungen bestimmt und in einem Azimut-Histogramm aufaddiert. Es wird die Richtung genommen, die zur höchsten Spitze im Histogramm gehört. Dies ist eine reine Azimutpeilung (unter Voraussetzung konstanter Elevation). Für kombinierte Azimut-/Elevationspeilung wäre ein sehr zeitaufwendiges zweidimensionales Histogramm nötig.

Die in EP 0 125 838 A1 beschriebene Korrelationsmethode kommt ohne $\vec{n}$-Bestimmung aus und ist für beliebige Array-geometrie anwendbar. Sie ist als eindimensionale Azimut-bestimmung beschrieben, die so aber nur für Einfallsrichtungen aus einem kleinen Elevationsbereich funktioniert. Will man die Elevationsbegrenzung vermeiden bzw. die Elevation mitbestimmen, muß ein genügend dichtes Azimut-/Elevationsraster durchsucht werden, wodurch das Verfahren langsamer wird.

Bei der in EP 0 125 838 A1 beschriebenen Fourieranalysemethode ist das Auswahlkriterium für die richtige Richtung die Kleinheit der Abweichungen vom Kosinusverlauf. Als geeignetes Maß für die Abweichungen werden die Fourierkoeffizienten höherer, hier zweiter Ordnung benutzt, die im Idealfall verschwinden müssen. Die Peilinformation steckt in den Fourierkoeffizienten erster Ordnung. In der Druckschrift wird dieses Verfahren für Kreisarrays als "spatial Fourier series" bezeichnet. Ferner wird kurz die Erweiterung auf allgemeinere Arrays diskutiert, die danach auf "Fourier series in two dimensions" führt.

Die Aufgabe der Erfindung besteht darin, das bei Malloy beschriebene Großbasis-Interferometerpeilsystem so abzuändern, daß es mit beliebigen planaren Antennenarrays, insbesondere des Typs 2 und 3, betreibbar ist und dennoch eindeutige Peilergebnisse liefert.

Die erfindungsgemäße Lösung dieser Aufgabe ist durch die kennzeichnenden Merkmale des Patentanspruchs 1 wiedergegeben. Die übrigen Ansprüche enthalten vorteilhafte Aus- und Weiterbildungen der Erfindung.

Ein erster Vorteil der Erfindung besteht darin, daß nunmehr mit beliebigen planaren Antennenarrays ohne zusätzliche Hilfsmaßnahmen (wie Einweisung durch eine zusätzliche Peilung durch einen Kleinbasis-Interferometerpeiler) eindeutige Peilergebnisse in Azimut und Elevation geliefert werden.

Ein weiterer Vorteil besteht darin, daß die Peilergebnisse sehr schnell berechnet werden können, weil die auftretenden Matrizen für die einzelnen Antennenkonfigurationen nur einmal berechnet werden müssen und dann pro Peilung nur einige wenige sehr schnelle Rechenoperationen durchgeführt werden müssen.

Im folgenden wird die Erfindung anhand eines Ausführungsbeispiels, nämlich eines nicht auf einem periodischen Ortsraumgitter liegenden Antennenarrays vom Typ 3, näher beschrieben.

Die grundsätzliche Idee, die bei diesem Peilsystem zur Anwendung kommt, besteht darin, eine Sequenz von Antennenkonfigurationen K(i) auf periodischen Gittern zu suchen, die asymptotisch in die gewünschte (und tatsächlich vorhandene) Antennenkonfiguration K (also z.B. ein regelmäßiges Pentagon) übergeht:

$$\text{Limes } K(i) = K$$

$$i \to \infty.$$

Dies ist allerdings nur möglich, wenn bei dieser Sequenz die Beträge der Basisvektoren $\vec{t}_1(i)$ und $\vec{t}_2(i)$ immer kleiner werden. Für solche "periodische Approximationen" K(i) kann man Malloys Verfahren prinzipiell noch anwenden. Bei dem im folgenden geschilderten Peilsystem kommen sowohl die asymptotische Konfiguration K als auch periodische Konfigurationen K(i) mit endlichem Index i (i = 1, 2, 3 ...) zum Einsatz.

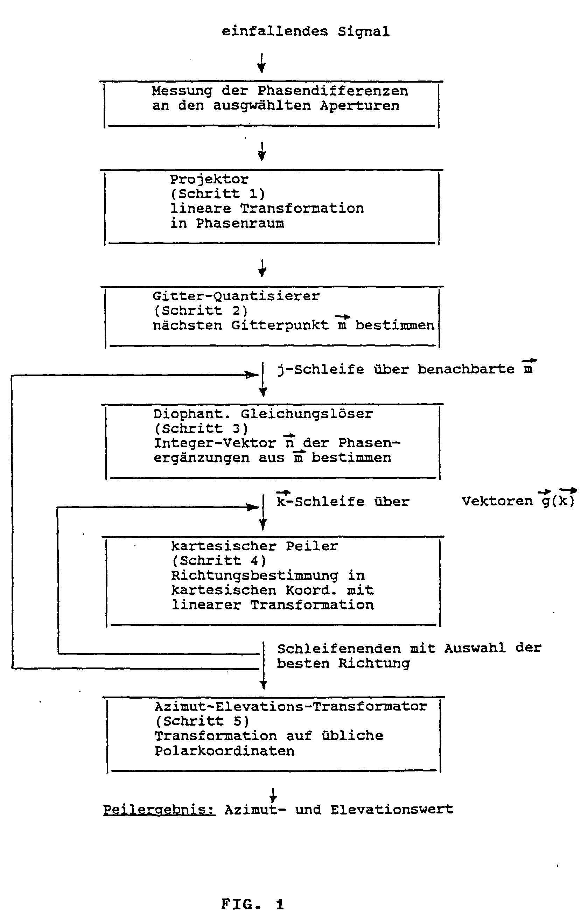

In FIG. 1 sind die einzelnen Verfahrensschritte angegeben, die bei dieser bevorzugten Ausführungsform des erfindungsgemäßen Peilsystems zur Anwendung kommen.

Schritt O:     Messung der Phasendifferenzen an ausgewählten Aperturen des Peilsystems.

Schritt 1:     Die Projektion der gemessenen Phasendifferenzen als Punkt in den (M-2)-dimensionalen Phasenraum muß mit der asymptotischen Projektionsmatrix durchgeführt werden, damit die Lage des projizierten Punkts in Bereichen mit festem $\vec{n}$ nicht von der Einfallsrichtung abhängt. Auch ohne Phasenfehler liegt der projizierte Punkt jetzt aber nicht mehr genau auf einem periodischen Phasenraumgitter.

Die benachbarten Punkte, die für M = N - 1 am leichtesten zu Fehleinweisungen führen können, liegen bei regelmäßigen N-gon-Arrays (N-gon = Polygon mit N Ekken ("Vertizes")) auf regelmäßigen, i.a. nicht ebenen N-gonen im (N-3)-dimensionalen Phasenraum symmetrisch um den richtigen Punkt zusammen mit je einem zweiten N-gon, das aus dem ersten durch Vorzeichenwechsel entsteht (Inversion am Zentrum).

So sind z.B. für N = 5 die zweidimensionalen Phasenraum-Pentagons notwendig eben, für N = 7 sind die entsprechenden vierdimensionalen Heptagons "schief" und setzen sich aus zwei unterschiedlichen zweidimensionalen Heptagons in zueinander orthogonalen Unterräumen zusammen.

Schritt 2:     Statt den Phasenraum in diesem nichtperiodischen Gitter zu quantisieren, wird dies mit dem periodischen Gitter getan, das zu einer "periodischen Approximation" K(i) gehört.

Um möglichst große Phasenmeßfehler zu vertragen, muß das zur Quantisierung benutzte periodische Phasenraumgitter möglichst große Gitterkonstanten aufweisen. Deshalb ist die Quantisierung zweckmäßigerweise mit der Konfiguration K(i) mit kleinstmöglichem i durchzuführen, die gerade noch das bei der benutzten Frequenz nötige eindeutige Blickfeld gewährleistet.

Wegen des Unterschieds zwischen asymptotischem, nicht periodischem Projektions- und periodischem Quantisierungs-Phasenraumgitter entspricht der nächste Gitterpunkt dann nicht mehr unbedingt dem besten Vektor $\vec{n}$, es kann auch ein anderer nahegelegener sein. Deshalb ist jetzt vorteilhafterweise eine j-Schleife über die nahegelegenen Punkte des Quantisierungsgitters mit Index $\vec{m}(j)$ vorgesehen.

Schritt 3:     Die Bestimmung von $\vec{n}$ aus $\vec{m}$ muß mit der gleichen Konfiguration K(i) durchgeführt werden wie die Gitterquantisierung; sie liefert zunächst den Vektor $\vec{n}_0(j)$ als spezielle Lösung einer inhomogenen diophantischen Gleichung (d.h. einer Gleichung mit ganzzahligen Ko-

effizienten und Variablen). $\vec{n}_0$ ist nur bis auf die allgemeine Lösung $\vec{g}(\vec{k})$ der entsprechenden homogenen diophantischen Gleichung bestimmt:

$$\vec{g}(\vec{k}) = P^t \cdot \vec{k},$$

wobei $\vec{k}$ ein beliebiger zweidimensionaler Vektor ist mit ganzzahligen Komponenten, dessen Betragsobergrenze durch die Frequenz der gepeilten elektromagnetischen Welle vorgegeben ist. P ist analog zu Malloy die (2xM)-Matrix von ganzen Zahlen, die angibt, welche Aperturen des von den Basisvektoren $\vec{t}_1$ und $\vec{t}_2$ aufgespannten Antennenelementgitters für Phasendifferenzmessungen benutzt werden. Die i-te Apertur (i = 1 ... M) wird durch den Differenzvektor

$$\vec{d}_i = P_{1i} \cdot \vec{t}_1 + P_{2i} \cdot \vec{t}_2$$

beschrieben. $P^t$ ist die zu P transponierte Matrix.

Wegen des Unterschieds zwischen K und K(i) entspricht diese Mehrdeutigkeit jetzt aber im Gegensatz zu Gitterarrays verschiedenen Richtungen, so daß zweckmäßigerweise zusätzlich noch eine $\vec{k}$-Schleife über eine kleine Anzahl von Vektoren $\vec{g}(\vec{k})$ eingesetzt wird; damit ist der gesamte $\vec{n}$-Vektor jetzt $\vec{n}(j,\vec{k}) = \vec{n}_0(j) + \vec{g}(\vec{k})$.

Schritt 4:     Bei der Berechnung der Richtungskosinus u aus den mit $\vec{n}(j,\vec{k})$ berechneten vollständigen Phasendifferenzen ist das oben schon erwähnte Ergebnis wichtig, daß in der resultierenden Transformationsmatrix alle Antennengitter-Größen herausfallen (vgl. hierzu Gleichung (8) und Gleichung (4) im Artikel von Malloy).

Die Transformationsmatrix kann damit für beliebige (u.a. auch für Nicht-Gitter-)Antennenkonfigurationen verwendet werden, weil sie nur die beliebigen kartesischen Koordinaten der einzelnen Antennenelemente enthält. Hier muß lediglich die reale asymptotische Konfiguration K eingesetzt werden.

Am Ende der $\vec{k}$- und j-Schleifen erfolgt die wahl des besten $\vec{n}(j,\vec{k})$-Vektors und damit

der Richtung über Minimierung des mittleren quadratischen Phasenfehlers (dies ist alternativ auch schon vor Schritt 4 möglich) ggf. unter Beachtung der sehr nützlichen Nebenbedingungen einer Blickfeldbegrenzung für die Richtungskosinus u.

Schritt 5:     Transformation in übliche Polarkoordinaten.

Durch die beiden zusätzlichen Schleifen ist das Verfahren für Nichtgitter-Arrays etwas langsamer als für GitterArrays, i.a. aber immer noch schneller als alle anderen dargestellten Verfahren für Azimut- und Elevationsbestimmung.

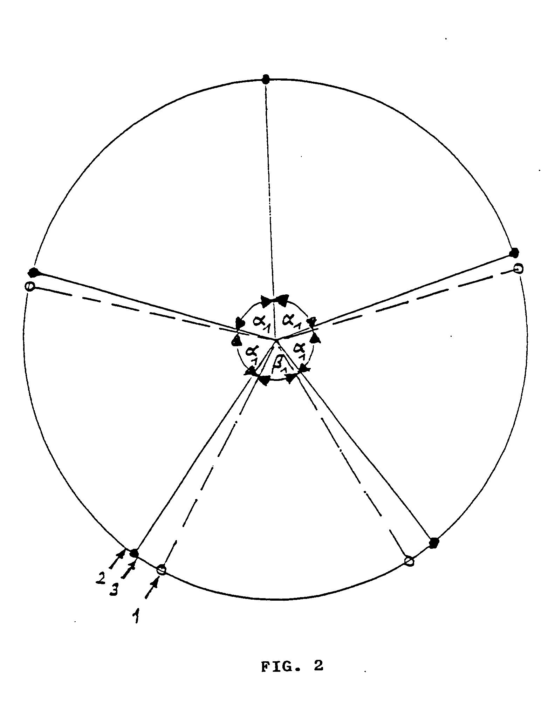

In FIG. 2 ist für den Fall eines regelmäßigen Pentagon-Antennenarrays der Anfang der Folge periodischer Approximationen (= Antennenkonfigurationen) K(i) dargestellt, deren Antennen auf den Punkten eines periodischen Ortsraumgitters liegen.

Die fünf Punkte des regelmäßigen Pentagons der tatsächlich vorliegenden Antennen-Konfiguration K sind durch schwarze Punkte dargestellt, die der (i=1)-Gitter-Approximation durch kleine Kreise.

Im speziellen Fall des Pentagons liegen auch bei den Approximationen alle fünf Punkte auf einem Kreis, allerdings sind die vom Zentrum aus gemessenen Winkel nicht gleich. Es tritt viermal $\alpha_i$ und einmal $\beta_i$ auf. Mit wachsendem i konvergieren $\alpha_i$ und $\beta_i$ schnell (proportional zu $\tau^{-2i}$) gegen den Winkel $\alpha = 72°$ des regelmäßigen Pentagons. Dies ist für die Ecke links unten für i = 1, 2 und 3 dargestellt. Dort bezeichnen die Pfeile die Lage der entsprechenden Ecken der Pentagons für i = 1, 2 bzw. 3 auf dem Kreis, auf dem auch das regelmäßige Pentagon mit seinen fünf Ecken liegt.

Die Auswahl einer von der verwendeten Frequenz abhängigen optimalen Konfiguration K(i) ermöglicht es, z.B. beim regelmäßigen Pentagon im Gegensatz zu den von Malloy behandelten Gitterarrays, daß die Phasenfehler bei fester Fehleinweisungswahrscheinlichkeit (d.h. bei festem Prozentsatz falscher $\vec{n}$-Bestimmung) mit sinkender Frequenz stufenweise größer werden dürfen, während sie bei Malloy immer so klein bleiben müssen wie an der oberen Frequenzgrenze.

Durch Einbau einer Blickfeld-Nebenbedingung für die Richtungskosinus u in die Auswahl der Richtung nach der j- und k-Schleife kann man zusätzlich die Wahrscheinlichkeit einer falschen $\vec{n}$- und damit Richtungsbestimmung stark verringern, wenn man Vorwissen über die möglichen Einfallsrichtungen hat, wie etwa eine Azimut- oder Elevationsbegrenzung (z.B. durch eine parallel durchgeführte Peilung mit einem Kleinbasis-Interferometer).

Durch diese Verallgemeinerungen erhält man ein Verfahren, das auch für Nichtgitterarrays mit ihren günstigen Mehrdeutigkeitseigenschaften anwendbar ist und dabei auch noch robuster gegen Phasenfehler ist als das ursprüngliche Verfahren von Malloy.

Es versteht sich, daß die Erfindung nicht auf die dargestellten Ausführungsbeispiele beschränkt ist, sondern vielmehr sinngemäß auf weitere übertragbar ist. So ist es z.B. in einigen Anwendungsfällen durchaus ausreichend, nach der Projektion der gemessenen Phasendifferenzwerte in dem (M-2)-dimensionalen Phasenraum und dessen Quantisierung durch ein vorgegebenes Phasenraumgitter G(i) entsprechend einer periodischen Ortsraumgitterstruktur K(i) denjenigen Phasenraumgitterpunkt zur weiteren Auswertung allein heranzuziehen, der dem Punkt der projizierten gemessenen Phasendifferenzwerte am nächsten liegt, was einem Weglassen der j-Schleife entspricht.

Ferner kann das hier beschriebene Verfahren direkt auf ein- und dreidimensionale Arrays übertragen werden. Dadurch ändert sich die Dimension des Phasenraums von M - 2 in M - 1 (eindimensionales Array) bzw. M - 3 (dreidimensionales Array).

Allgemein werden bei s-dimensionalen Arrays die vollständigen Phasendifferenzen in einen s-dimensionalen Richtungsraum $\vec{u}$ projiziert. Für s = 3 muß daher für die möglichen realen Richtungen die Nebenbedingung $|\vec{u}| = 1$ erfüllt sein.

**Patentansprüche**

1. Großbasis-Interferometerpeilsystem zur Ermittlung der Einfallsrichtung von elektromagnetischen Wellen, mit einer Konfiguration K von N in einer Ebene angeordneten Antennen, mit einer Einrichtung zur Messung von Phasendifferenzwerten zwischen den Empfangssignalen von M ausgewählten Antennenpaaren der Konfiguration K und mit einer Auswerteeinheit zur Ermittlung der Einfallsrichtung der elektromagnetischen Wellen aus den während einer Peilung gemessenen Phasendifferenzwerten, **gekennzeichnet durch** folgende Merkmale:

   - es ist mindestens eine Folge von möglichen weiteren Konfigurationen K(i) von jeweils N in der Ebene auf Punkten eines periodischen Ortsraumgitters mit den Ortsraum-Basisvektoren $\vec{t}_1(i)$ und $\vec{t}_2(i)$ angeordneten Antennen vorgegeben, die gemäß der Beziehung

     $$\text{Limes } K(i) = K$$
     $$i \to \infty$$

     mit wachsendem i asymptotisch in die Antennenkonfiguration K übergeht, wobei für die Ortsraum-Basisvektoren gilt:

     $$\left|\vec{t}_j(i+1)\right| < \left|\vec{t}_j(i)\right|$$

   mit i = 1, 2, 3 ... und j = 1, 2;

   - die während einer Peilung gemessenen Phasendifferenzwerte werden mittels einer aus der Folge von Antennenkonfigurationen K(i) für i → ∞ abgeleiteten linearen Transformationsmatrix als Punkt in einen (M-2)-dimensionalen Phasenraum projiziert;
   - in dem Phasenraum wird mit Hilfe der Konfiguration K(i) ein passendes periodisches Phasenraumgitter G(i) definiert, wobei jeder Punkt dieses Phasenraumgitters eindeutig **durch** einen Indexvektor $\vec{m}$ charakterisiert ist;
   - aus der Menge aller Punkte des vorgegebenen Phasenraumgitters G(i) wird derjenige Punkt ausgewählt, der gemäß vorgegebener Kriterien die beste Übereinstimmung mit dem Punkt der projizierten gemessenen Phasendifferenzwerte aufweist;
   - anhand des Indexvektors $\vec{m}$ des ausgewählten Phasenraumgitterpunktes und der gemessenen Phasendifferenzwerte werden die vollständigen Phasendifferenzwerte der Peilung abgeleitet und aus den vollständigen Phasendifferenzwerten die Einfallsrichtung der gepeilten elektromagnetischen Welle ermittelt.

2. Großbasis-Interferometerpeilsystem nach Anspruch 1, **dadurch gekennzeichnet, daß** derjenige Phasenraumgitterpunkt ausgewählt wird, der den geringsten Abstand zu dem Punkt der projizierten gemessenen Phasendifferenzwerte aufweist.

3. Großbasis-Interferometerpeilsystem nach Anspruch 1, **dadurch gekennzeichnet,**

   - **daß** zunächst diejenigen J Phasenraumgitterpunkte ausgewählt werden, deren Abstände zu dem Punkt der projizierten gemessenen Phasendifferenzwerte kleiner sind als ein vorgegebener Maximalabstand;
   - **daß** anschließend für jeden dieser Punkte aus dessen Indexvektoren m mit Hilfe der zugehörigen Antennenkonfiguration K(i) die ganzzahligen Vielfachen $\vec{n}$ von 2π bestimmt werden, um die sich die vollständigen Phasendifferenzwerte jeweils von den entsprechenden gemessenen Phasendifferenzwerten additiv unterscheiden, gemäß der Beziehungen:

     $$\vec{n}(j,\vec{k}) = \vec{n}_0(j) + \vec{g}(\vec{k}) \qquad \text{mit } j = 1 \dots J$$

     und

     $$\vec{g}(\vec{k}) = p^t \cdot \vec{k}$$

wobei $\vec{k}$ ein beliebiger zweidimensionaler Vektor mit ganzzahligen Komponenten ist, dessen Maximalbetrag durch die Frequenz der zu peilenden elektromagnetischen Welle vorgegeben ist;

- **daß** danach für jeden dieser Vektoren $\vec{n}(j,\vec{k})$ die entsprechenden vollständigen Phasendifferenzwerte bestimmt werden, und anhand dieser Phasendifferenzwerte die daraus resultierenden möglichen Einfallsrichtungen der gepeilten elektromagnetischen Welle bestimmt werden;

- **daß** anhand vorgegebener Kriterien eine dieser möglichen Richtungen als die wahrscheinlichste ausgewählt wird.

4. Großbasis-Interferometerpeilsystem nach Anspruch 3, **dadurch gekennzeichnet, daß** die mögliche Einfallsrichtung mit dem kleinsten mittleren quadratischen Phasenfehler als die wahrscheinlichste Einfallsrichtung der elektromagnetischen Welle ausgewählt wird.

5. Großbasis-Interferometerpeilsystem nach einem der vorhergehenden Ansprüche, **dadurch gekennzeichnet, daß** das Phasenraumgitter G(i) in Abhängigkeit von der Frequenz der gepeilten elektromagnetischen Welle ausgewählt wird.

6. Großbasis-Interferometerpeilsystem nach einem der vorhergehenden Ansprüche, **dadurch gekennzeichnet, daß** die Bestimmung der Einfallsrichtung der gepeilten elektromagnetischen Welle zunächst in kartesischen Koordinaten erfolgt und anschließend eine Transformation in Polarkoordinaten durchgeführt wird.

7. Großbasis-Interferometerpeilsystem nach einem der vorhergehenden Ansprüche, **dadurch gekennzeichnet, daß** als ein Kriterium bei der Auswahl der möglichen Einfallsrichtungen der gepeilten elektromagnetischen Welle eine Blickfeldbegrenzung für das Peilsystem vorgesehen ist.

**Claims**

1. Wide-aperture interferometer direction-finding system for determining the direction of incidence of electromagnetic waves, having a configuration K of N antennas arranged in one plane, having a device for measuring phase difference values between the received signals of M selected antenna pairs of the configuration K and having an evaluation unit for determining the direction of incidence of the electromagnetic waves from the phase difference values measured during a direction-finding operation, **characterised by** the following features:

- at least one sequence of possible further configurations K(i) of N respective antennas arranged in the plane on points of a periodic local spatial grid with local spatial basis vectors $\vec{t}_1(i)$ and $\vec{t}_2(i)$ is specified, which, with increasing i, enters asymptotically into the antenna configuration K according to the relationship

$$\text{limit } K(i) = K$$
$$i \rightarrow \infty$$

where:

$$\left|\vec{t}_j(i+1)\right| < \left|\vec{t}_j(i)\right|$$

with i = 1, 2, 3 ... and j = 1, 2

holds for the local spatial basis vectors;

- the phase difference values measured during a direction-finding operation are projected as a point in an (M-2) dimensional phase space by means of a linear transformation matrix derived from the sequence of antenna configurations K(i) for i → ∞;

- in the phase space an appropriate periodic phase space grid G(i) is defined with the aid of the configuration K(i), wherein each point of this phase space grid is unambiguously **characterised by** an index vector $\vec{m}$;

- that point which, according to specified criteria, has the best correspondence with the point of the projected measured phase difference values, is selected from the entirety of all points of the specified phase space grid G(i);

- the complete phase difference values of the direction-finding operation are derived with the aid of the index vector $\vec{m}$ of the selected phase space grid point, and the direction of incidence of the plotted electromagnetic wave is determined from the complete phase difference values.

2. Wide-aperture interferometer direction-finding system according to Claim 1, **characterised in that**, that phase space grid point which has the smallest distance to the point of the projected measured phase difference values, is selected.

3. Wide-aperture interferometer direction-finding system according to Claim 1, **characterised in that**

- those J phase space grid points whose distances to the point of the projected measured phase difference values are less than a specified maximum distance are initially selected;

- the whole multiples $\vec{n}$ of $2\pi$ are then determined for each of these points from its index vectors m with the aid of the associated antenna configuration K(i) in order to additively differentiate the complete phase difference values from each of the corresponding measured phase difference values, in accordance with the relationships:

$$\vec{n}(j,\vec{k}) = \vec{n}_o(j) + \vec{g}(\vec{k}) \qquad \text{with } j = 1 \ldots J$$

and

$$\vec{g}(\vec{k}) = p^t \cdot \vec{k}$$

where $\vec{k}$ is an arbitrary two-dimensional vector with whole-number components, whose maximum value is specified by the frequency of the electromagnetic wave to be plotted;
- thereafter, the corresponding complete phase difference values are determined for each of these vectors $\vec{n}(j,\vec{k})$, and the resulting possible directions of incidence of the plotted electromagnetic wave are determined with the aid of these phase difference values;
- one of these possible directions is selected as the most probable direction with the aid of specified criteria.

4. Wide-aperture interferometer direction-finding system according to Claim 3, **characterised in that** the possible direction of incidence having the smallest mean quadratic phase error is selected as the most probable direction of incidence of the electromagnetic wave.

5. Wide-aperture interferometer direction-finding system according to one of the preceding Claims, **characterised in that** the phase space grid G(i) is selected in accordance with the frequency of the plotted electromagnetic wave.

6. Wide-aperture interferometer direction-finding system according to one of the preceding Claims, **characterised in that** the determination of the direction of incidence of the plotted electromagnetic wave is initially carried out in cartesian coordinates and a transformation into polar coordinates is then carried out.

7. Wide-aperture interferometer direction-finding system according to one of the preceding Claims, **characterised in that** a limited field of view is provided as a criterion for the direction-finding system during the selection of the possible directions of incidence of the plotted electromagnetic wave.

**Revendications**

1. Système de radiogoniométrie par interférométrie avec une grande base pour déterminer la direction d'incidence d'ondes électromagnétiques avec une configuration K de N antennes disposées dans un plan, une installation pour mesurer les différences de phase entre les signaux de réception de M paires d'antennes sélectionnées dans la configuration K et d'une unité d'exploitation pour déterminer la direction d'incidence des ondes électromagnétiques à partir des différences de phase mesurées pendant une radiogoniométrie,
**caractérisé en ce que**
au moins une suite d'autres configurations K(i) possibles de chaque fois N antennes dans les plans des points d'un réseau d'espace local périodique avec des vecteurs de base de l'espace local $\vec{t}_1(i)$ et $\vec{t}_2(i)$, correspondant à la relation

$$\lim K(i) = K$$
$$i \rightarrow \infty$$

avec i croissant de manière asymptotique pour rejoindre la configuration d'antenne K, les vecteurs de base de l'espace local étant donnés par la relation

$$\left|\vec{t}_j(i+1)\right| < \left|\vec{t}_j(i)\right|$$
$$i=1,2,3\ldots\text{et } j=1,2$$

- Les différences de phase mesurées pendant une opération de radiogoniométrie sont projetées à l'aide d'une matrice de transformation linéaire, déduite de la succession des configurations d'antenne K(i) pour $i \rightarrow \infty$, sous la forme d'un point projeté dans l'espace des phases à (M-2) dimensions,
- dans l'espace des phases, à l'aide de la configuration K(i), on définit un réseau d'espace de phases périodique adapté G(i), chaque point de ce réseau de l'espace des phases étant **caractérisé** de manière bijective par un vecteur d'indice $\vec{m}$, à partir de l'ensemble de tous les points du réseau de l'espace des phases prédéterminé G(i) on sélectionne le point qui selon des critères prédéterminés présente la meilleure concordance avec le point des valeurs de différences de phases mesurées et projetées,
- à l'aide du vecteur d'indice $\vec{m}$ du point du réseau de l'espace des phases et des différences de phases, mesurées, on déduit les valeurs complètes des différences de phases de l'opération de radiogoniométrie et à partir des valeurs des différences de phases, complètes, on détermine la direction d'incidence de l'onde électromagnétique soumise à la radiogoniométrie.

2. Système de radiogoniométrie par interférence avec une grande base selon la revendication 1, **caractérisé en ce qu'** on sélectionne le point du réseau de l'espace des phases qui a la plus petite distance par rapport au point des valeurs de différences de phases mesurées projetées.

3. Système de radiogoniométrie selon la revendication 1, **caractérisé en ce que**

   - tout d'abord on sélectionne les grands J points du réseau de l'espace des phases dont les distances par rapport aux points des valeurs de différences de phases mesurées projetées sont inférieures à une distance maximale prédéterminée ;
   - ensuite, pour chacun des points, à partir des vecteurs d'indice m, à l'aide de la configuration d'antenne correspondante K(i), on détermine les multiples entiers de $\vec{n}$ par $2\pi$, pour distinguer de manière additive les valeurs de différence de phases complètes chaque fois des valeurs de différence de phases mesurées correspondantes selon les relations

$$\vec{n}(j, \vec{k}) = \vec{n}_0(j) + \vec{g}(\vec{k}) \text{ avec } j = 1...J$$

$$\vec{g}(\vec{k}) = p^t \cdot \vec{k}$$

   dans ces relations, $\vec{k}$ est un vecteur bidimensionnel quelconque avec des composants à nombres entiers dont l'amplitude maximale est prédéterminée par la fréquence de longue électromagnétique à déterminer par goniométrie,
   - **en ce qu'**après, pour chacun de ces vecteurs $\vec{n}(j,\vec{k})$, on détermine les différences de phases complètes correspondantes et à l'aide de ces différences de phases on détermine les directions d'incidence possibles résultantes de l'onde électromagnétique déterminées par radiogoniométrie,
   - à l'aide des critères prédéterminés on sélectionne l'une des directions possibles comme étant la plus probable.

4. Système de radiogoniométrie selon la revendication 3, **caractérisé en ce qu'** on sélectionne la direction d'incidence possible ayant la plus petite erreur quadratique moyenne de phase comme direction d'incidence la plus probable de l'onde électromagnétique.

5. Système de radiogoniométrie selon l'une quelconque des revendications précédentes, **caractérisé en ce qu'** on sélectionne le réseau de l'espace des phases G (i) suivant la fréquence de l'onde électromagnétique obtenue par radiogoniométrie.

6. Système de radiogoniométrie selon l'une quelconque des revendications précédentes, **caractérisé en ce qu'** on détermine la direction d'incidence de l'onde électromagnétique obtenue par radiogoniométrie, tout d'abord en coordonnées cartésiennes puis ensuite on les transforme en coordonnées polaires.

7. Système de radiogoniométrie selon l'une quelconque des revendications précédentes, **caractérisé en ce que** comme critère de la sélection des directions d'incidence possibles de l'onde électromagnétique obtenues par radiogoniométrie on prévoit une limitation du champ de visée pour le système de radiogoniométrie.

EP 0 693 693 B1

einfallendes Signal

↓

| Messung der Phasendifferenzen an den ausgwählten Aperturen |

↓

| Projektor (Schritt 1) lineare Transformation in Phasenraum |

↓

| Gitter-Quantisierer (Schritt 2) nächsten Gitterpunkt $\vec{m}$ bestimmen |

j-Schleife über benachbarte $\vec{m}$

↓

| Diophant. Gleichungslöser (Schritt 3) Integer-Vektor $\vec{n}$ der Phasen-ergänzungen aus $\vec{m}$ bestimmen |

$\vec{k}$-Schleife über     Vektoren $\vec{g(k)}$

↓

| kartesischer Peiler (Schritt 4) Richtungsbestimmung in kartesischen Koord. mit linearer Transformation |

Schleifenenden mit Auswahl der besten Richtung

↓

| Azimut-Elevations-Transformator (Schritt 5) Transformation auf übliche Polarkoordinaten |

↓

Peilergebnis: Azimut- und Elevationswert

FIG. 1

FIG. 2